# EUROPEAN PATENT SPECIFICATION

(11) **EP 3 337 118 B1**
(45) Date of publication and mention of the grant of the patent: **29.04.2020**
(21) Application number: 16203819.4
(22) Date of filing: 13.12.2016
(51) Int. Cl.: H04L 29/06

(54) **METHOD FOR AN ENHANCED CONTROL FUNCTION SELECTION IN A COMMUNICATION NETWORK, COMMUNICATION NETWORK, HOME SUBSCRIBER SERVER, PROGRAM AND COMPUTER PROGRAM PRODUCT**
VERFAHREN FÜR EINE VERBESSERTE STEUERFUNKTIONSAUSWAHL IN EINEM KOMMUNIKATIONSNETZ, KOMMUNIKATIONSNETZ, HEIMTEILNEHMERSERVER, PROGRAMM UND COMPUTERPROGRAMMPRODUKT
PROCÉDÉ POUR OPTIMISER UNE SÉLECTION DE FONCTIONS DE COMMANDE DANS UN RÉSEAU DE COMMUNICATION, RÉSEAU DE COMMUNICATION, SERVEUR D'ABONNÉ DOMESTIQUE, PROGRAMME ET PRODUIT-PROGRAMME INFORMATIQUE

(43) Date of publication of application: 20.06.2018
(73) Proprietor: Deutsche Telekom AG, 53113 Bonn (DE)
(72) Inventor: SIVCHENKO, Dmitry, 64331 Weiterstadt (DE)
(74) Representative: Schwöbel, Thilo K.

(56) References cited:
- US-A1- 2008 160 996
- US-A1- 2010 217 875
- "3rd Generation Partnership Project; Technical Specification Group Services and System Aspects; IP Multimedia Subsystem (IMS); Stage 2 (Release 14)", 3GPP DRAFT; 23228-E20_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 December 2016 (2016-12-05), XP051240489, Retrieved from the Internet: URL:http://www.3gpp.org/ftp/tsg_sa/WG2_Arc h/Latest_SA2_Specs/DRAFT_INTERIM/Archive/ [retrieved on 2016-12-05]

## Description

### BACKGROUND

The present invention relates to a method for an enhanced control function selection in a communication network and with respect to a user equipment requesting an IP (Internet Protocol) multimedia subsystem communication service from the communication network, wherein the communication network comprises an access network and a core network, the access network comprising at least one access node, wherein the communication network comprises a home subscriber server, a plurality of interrogating call state control function entities and a plurality of serving call state control function entities, wherein - with respect to the user equipment requesting the IP multimedia subsystem communication service being related to a service identity that is known to the home subscriber server - a specific interrogating call state control function entity is used among the plurality of interrogating call state control function entities, and a specific serving call state control function entity needs to be selected among the plurality of serving call state control function entities.

Furthermore, the present invention relates to a communication network for an enhanced control function selection with respect to a user equipment requesting an IP (Internet Protocol) multimedia subsystem communication service from the communication network, wherein the communication network comprises an access network and a core network, the access network comprising at least one access node, wherein the communication network comprises a home subscriber server, a plurality of interrogating call state control function entities and a plurality of serving call state control function entities, wherein - with respect to the user equipment requesting the IP multimedia subsystem communication service being related to a service identity that is known to the home subscriber server - a specific interrogating call state control function entity is used among the plurality of interrogating call state control function entities, and a specific serving call state control function entity needs to be selected among the plurality of serving call state control function entities.

Furthermore, the present invention relates to a home subscriber server for an enhanced control function selection in an inventive communication network, according to the inventive method.

Furthermore, the present invention relates to a program comprising a computer readable program code and a computer program product for an enhanced control function selection in a communication network and with respect to a user equipment requesting an IP (Internet Protocol) multimedia subsystem communication service from the communication network, the computer program product comprising a computer program stored on a storage medium, wherein the program code, when executed on a computer or on a home subscriber server or on a network node of a communication network, especially providing the functionalities of a home subscriber server, or in part on a home subscriber server and in part on a network node of the communication network, causes the computer or the home subscriber server or the network node of the communication network to perform the steps of the inventive method.

IP multimedia subsystem (IMS) communication service architectures are widespread and IP multimedia subsystem communication networks are used by many communication network operators to offer and control different services, e.g., Voice over IP services. Different value-added services in IP multimedia subsystem network architectures can be provided by a variety of application servers (AS).

When a user equipment requests an IP multimedia subsystem (IMS) communication service, related to/addressed to a specific service identity (e.g., ranges of numbers, such as, e.g., prominently the range of numbers starting with "0800-"; wildcarded public service identity (wPSI)), an initiating message (e.g., SIP invite messages), related to this request, is received by an interrogating call state control function entity (I-CSCF) in the terminating leg. Information on such service identities is commonly stored in a home subscriber server (HSS) and associated information regarding the services for call handling is applied to requests regarding a number matching a particular service identity. Such information regarding the services for call handling can be, e.g., stored capability information or stored name information of a particular service call session control function (S-CSCF) entity (if the application server is connected via an IMS service control interface).

Typically, when a service call session control function entity is selected by an interrogating call state control function entity for a specific service identity (or e.g., a wildcarded public service identity), information on the selected service call session control function entity is stored in the home subscriber server after a server assignment request message from the selected service call session control function entity to the home subscriber server. Consequently, for following calls regarding this service identity (or regarding an identical or similar used call identifier as the initial one), the home subscriber server does not return capability information concerning this service identity to the interrogating call state control function entity, but rather returns the stored name of the selected serving call state control function entity, which was previously selected (by the interrogating call state control function entity and hence stored in the home subscriber server) during the first call regarding this service identity.

Thus, the process is not flexible as the serving call state control function entity that was once selected for a specific service identity is commonly reselected in following calls that are covered by this service identity. This can lead to an overflow of incoming messages at a particular serving call state control function entity or to a disadvantageous selection of the serving call state control function entity handling the further incoming calls regarding the specific service identity (e.g., disadvantageous geographic location of the serving call state control function entity for a further incoming call).

Document US 2008/160996 discloses a method of session processing in the Internet Protocol (IP) Multimedia Subsystem (IMS) comprises: Interrogating-Call State Control Function (I-CSCF) accessing the Home Subscriber Server (HSS) to query the registration location of the called user, the I-CSCF sending the Session Initiation Protocol (SIP) request to the Serving-Call State Control Function (S-CSCF) based on the response of the HSS; when the response time of the S-CSCF to the SIP request sent from the I-CSCF has expired, the I-CSCF re-selecting the S-CSCF, and sending the SIP request to the S-CSCF. And an Interrogating-Call State Control Function is provided. Further, if the S-CSCF returned by the HSS to process the unregistered service of the IMS user does not responded because of the device failure or communication interruption or the like, the I-CSCF can re-select other S-CSCF to process the unregistered service of the IMS user, so as to improve the quality of service and to increase the satisfaction of user.

### SUMMARY

It is an object of the present invention to provide a method for an enhanced control function selection in a communication network that minimizes the possibilities for problem occurrence and optimizes the data flow with respect to the state of the art.

The object of the present invention is achieved by a method for an enhanced control function selection in a communication network and with respect to a user equipment requesting an IP (Internet Protocol) multimedia subsystem communication service from the communication network, wherein the communication network comprises an access network and a core network, the access network comprising at least one access node, wherein the communication network comprises a home subscriber server, a plurality of interrogating call state control function entities and a plurality of serving call state control function entities, wherein - with respect to the user equipment requesting the IP multimedia subsystem communication service being related to a service identity that is known to the home subscriber server- a specific interrogating call state control function entity is used among the plurality of interrogating call state control function entities, and a specific serving call state control function entity needs to be selected among the plurality of serving call state control function entities, wherein the method comprises the following steps:
-- in a first step, upon a request of an IP (Internet Protocol) multimedia subsystem communication service by the user equipment, an initiating message, related to the service identity, is received by the specific interrogating call state control function entity,
-- in a second step, subsequent to the first step, a location information request message is transmitted, by the specific interrogating call state control function entity, to the home subscriber server,
-- in a third step, subsequent to the second step, a location information answer message is transmitted, by the home subscriber server, to the specific interrogating call state control function entity,
wherein the location information answer message comprises a required capability information, the required capability information corresponding to a capability that needs to be provided by the specific serving call state control function entity that is to be selected, by the specific interrogating call state control function entity, among the plurality of serving call state control function entities,
wherein any subsequent location information answer message - in response to a subsequent location information request message - that is
-- received by the home subscriber server and
-- transmitted either by the specific interrogating call state control function entity or by another one of the plurality of interrogating call state control function entities - as the requesting entity - and
-- related to the service identity related to the IP multimedia subsystem communication service requested by the user equipment,
likewise comprises a required capability information such that the requesting entity - the specific interrogating call state control function entity or the other one of the plurality of interrogating call state control function entities- selects the specific serving call state control function entity, that is thereby becoming the selected serving call state control function entity corresponding to the subsequent location information request message.

It is thereby advantageously possible according to the present invention that an optimized selection of a control function in a communication network is achievable, in case a user equipment requests an IP multimedia subsystem communication service, and an initiating message, related to this request by the user equipment, is received by a specific interrogating call state control function entity. In the following, the specific interrogating call state control function entity transmits a location information request message (related to a service identity that is known to a home subscriber server) to a home subscriber server. Consequently, the home subscriber server transmits required capability information to the specific interrogating call state control function entity, wherein the required capability information corresponds to a capability that needs to be provided by a specific serving call state control function entity that is to be selected by the specific interrogating call state control function entity. In any subsequent location information answer message (that is related to the same service identity associated to the prior request of an IP multimedia subsystem communication service by a user equipment) from the home subscriber server to the specific or another interrogating call state control function entity, again a required capability information is transmitted, wherein the required capability information corresponds to a capability that needs to be provided by a specific serving call state control function entity that is to be selected by the specific or another interrogating call state control function entity.

Thus, according to the present invention, the interrogating call state control function entity can afterward select a specific serving call state control function entity, since the interrogating call state control function entity is supplied by the home subscriber server with the required capability information. This process is in particular also possible, if there has already been an incoming request of an IP (Internet Protocol) multimedia subsystem communication service regarding this particular service identity before, and a serving call state control function entity has already been involved in the processing of said prior request of an IP (Internet Protocol) multimedia subsystem communication service.

According to a preferred embodiment of the present invention, the communication network is a fixed-line network and the user equipment is a device that is connectable to a fixed-line network (e.g., a computer, telephone, etc.) and/or to a local area network or metropolitan area network, which offers access to a fixed-line network, such as e.g. a wireless local area network, a wireless metropolitan area network, etc..

According to another preferred embodiment of the present invention, the communication network is a mobile communication network, the access node of the access network is a base station entity of the mobile communication network and the user equipment is a mobile device, e.g., a mobile phone, mobile computer, etc..

According to an embodiment of the present invention, the initiating message, related to the service identity, is an SIP message, especially an initiating SIP message, e.g., an SIP invite message, SIP options message, SIP subscribe message etc..

According to an embodiment of the inventive method, in a fourth step, subsequent to the third step, the initiating message or a corresponding initiating message is transmitted, by the specific interrogating call state control function entity, to the selected serving call state control function entity.

It is thereby advantageously possible according to an embodiment of the present invention that after a location information answer message is transmitted from the home subscriber server to a specific interrogating call state control function entity, said specific interrogating call state control function entity transmits an initiating message or a corresponding initiating message, e.g. an invite message, to a specific serving call state control function entity, which is selected by the specific interrogating call state control function entity based on the required capability information transmitted from the home subscriber server to the specific interrogating call state control function entity. Thus, an appropriate serving call state control function entity is integrated into the call handling.

According to an embodiment of the inventive method, in a fifth step, subsequent to the fourth step, a server assignment request message is transmitted from the selected serving call state control function entity to the home subscriber server in case that the selected serving call state control function entity lacks a service profile that is required for providing the IP multimedia subsystem communication service requested by the user equipment, wherein in a sixth step, subsequent to the fifth step, a server assignment answer message is transmitted from the home subscriber server to the selected serving call state control function entity, the server assignment answer message providing the required service profile.

It is thereby advantageously possible according to an embodiment of the present invention that, after the specific serving call state control function entity is selected by the specific interrogating call state control function entity and has received an initiating message (e.g., an invite message), the specific serving call state control function entity requests service profile information (by a server assignment request message) from the home subscriber server. Consequently, the home subscriber server sends a server assignment answer message to the specific serving call state control function entity, comprising the required service profile information (e.g., an initial filter criteria (iFC) is transmitted from the home subscriber server to the specific serving call state control function entity). It is thereby advantageously possible according to an embodiment of the present invention that the specific serving call state control function entity receives all the required information for further handling a corresponding call (or generally a corresponding request of an IP multimedia subsystem communication service).

According to an embodiment of the inventive method, after the home subscriber server having received the server assignment request message from the selected serving call state control function entity in the fifth step, it is avoided that - within the home subscriber server - the selected serving call state control function entity is assigned to or associated with the service identity and/or any assignment or association information assigned to or associated with the service identity does not specify the selected serving call state control function entity.

Thereby it is advantageously possible according to an embodiment of the present invention that the home subscribe server may receive and store information concerning said specific, selected serving call state control function entity, when receiving the server assignment request message from the specific serving call state control function entity. However, in this case, the home subscriber server does at least not associate or link any of such information concerning the identity of said specific serving call state control function entity with the service identity or any information associated with the service identity. As a consequence, the home subscriber server does not link any information on said selected serving call state control function entity with the service identity.

Thereby it is advantageously possible according to an embodiment of the present invention that the home subscriber server, after the home subscriber server having received the server assignment request message from the selected serving call state control function entity in the fifth step and having potentially sent a server assignment answer message to the selected serving call state control function entity in the sixth step, does not store or save any information on the selected serving call state control function entity. As a consequence, the home subscriber server does not (and cannot) link any information on said selected serving call state control function entity with the service identity.

According to an embodiment of the inventive method, the service identity - being related to the IP multimedia subsystem communication service requested by the user equipment - corresponds to a wildcarded public service identity.

It is thereby advantageously possible according to an embodiment of the present invention that the service identity corresponds to a wildcarded public service identity and that such a wildcarded public service identity is known to a home subscriber server.

In an embodiment of the present invention, the home subscriber server does not associate any specific serving call state control function entity with a range of numbers or a wildcarded public service identity (e.g., generally and/or after the fifth step of the inventive method). Thus, for a following request message from an interrogating call state control function entity concerning a range of numbers and/or related to a specific wildcarded public service identity, the home subscriber server does not transmit any name/identity information of a specific serving call state control function entity towards the specific interrogating call state control function entity, but rather transmits a required capability information, the required capability information corresponding to a capability that needs to be provided by a serving call state control function entity to handle the call. Thus, the interrogating call state control function entity is enabled to select an appropriate serving call state control function entity in the following. This way, according to the present invention, calls (or generally request of an IP (Internet Protocol) multimedia subsystem communication service) related to a specific wildcarded public service identity are not necessarily routed via the same serving call state control function entity, but can be routed via different serving call state control function entities related to the communication network.

According to an embodiment of the inventive method, the required capability information indicates, to the specific interrogating call state control function entity, a subset of the plurality of serving call state control function entities to be potentially assigned to the handling of the IP multimedia subsystem communication service requested by the user equipment.

It is thereby advantageously possible according to an embodiment of the present invention that the home subscriber server indicates to the specific interrogating call state control function entity a list containing information (e.g., name address information) on different serving call state control function entities that are allowed to be selected by the specific interrogating call state control function entity for further handling the incoming request of an IP (Internet Protocol) multimedia subsystem communication service.

The object of the present invention is furthermore achieved by a Communication network for an enhanced control function selection with respect to a user equipment requesting an IP (Internet Protocol) multimedia subsystem communication service from the communication network, wherein the communication network comprises an access network and a core network, the access network comprising at least one access node, wherein the communication network comprises a home subscriber server, a plurality of interrogating call state control function entities and a plurality of serving call state control function entities, wherein - with respect to the user equipment requesting the IP multimedia subsystem communication service being related to a service identity that is known to the home subscriber server - a specific interrogating call state control function entity is used among the plurality of interrogating call state control function entities, and a specific serving call state control function entity needs to be selected among the plurality of serving call state control function entities, wherein the communication network is configured such that:
-- upon a request of an IP (Internet Protocol) multimedia subsystem communication service by the user equipment, an initiating message, related to the service identity, is received by the specific interrogating call state control function entity,
-- a location information request message is transmitted, by the specific interrogating call state control function entity, to the home subscriber server,
-- a location information answer message is transmitted, by the home subscriber server, to the specific interrogating call state control function entity,
wherein the location information answer message comprises a required capability information, the required capability information corresponding to a capability that needs to be provided by the specific serving call state control function entity that is to be selected, by the specific interrogating call state control function entity, among the plurality of serving call state control function entities,
wherein the communication network is further configured such that any subsequent location information answer message - in response to a subsequent location information request message - that is
-- received by the home subscriber server and
-- transmitted either by the specific interrogating call state control function entity or by another one of the plurality of interrogating call state control function entities - as the requesting entity - and
-- related to the service identity related to the IP multimedia subsystem communication service requested by the user equipment,
likewise comprises a required capability information such that the requesting entity - the specific interrogating call state control function entity or the other one of the plurality of interrogating call state control function entities - selects the specific serving call state control function entity, that is thereby becoming the selected serving call state control function entity corresponding to the subsequent location information request message.

It is thereby advantageously possible according to the present invention that a communication network is configured in such a way that an optimized selection of a control function in a communication network is achievable, in case a user equipment requests an IP multimedia subsystem communication service, and an initiating message, related to this request by the user equipment, is received by a specific interrogating call state control function entity. In the following, the specific interrogating call state control function entity transmits a location information request message (related to a service identity that is known to a home subscriber server) to a home subscriber server. Consequently, the home subscriber server transmits required capability information to the specific interrogating call state control function entity, wherein the required capability information corresponds to a capability that needs to be provided by a specific serving call state control function entity that is to be selected by the specific interrogating call state control function entity. In any subsequent location information answer message (that is related to the same service identity associated to the prior request of an IP multimedia subsystem communication service by a user equipment) from the home subscriber server to the specific or another interrogating call state control function entity, again a required capability information is transmitted, wherein the required capability information corresponds to a capability that needs to be provided by a specific serving call state control function entity that is to be selected by the specific or another interrogating call state control function entity.

Thus, according to the present invention, the interrogating call state control function entity can afterward select a specific serving call state control function entity, since the interrogating call state control function entity is supplied by the home subscriber server with the required capability information. This process is in particular also possible, if there has already been an incoming request of an IP (Internet Protocol) multimedia subsystem communication service regarding this particular service identity before, and a serving call state control function entity has already been involved in the processing of said prior request of an IP (Internet Protocol) multimedia subsystem communication service.

The object of the present invention is furthermore achieved by a home subscriber server for an enhanced control function selection in a communication network according to the present invention.

It is thereby advantageously possible according to the present invention that a home subscriber server is configured in such a way that an optimized selection of a control function in a communication network is achievable, in case a user equipment requests an IP multimedia subsystem communication service, and an initiating message, related to this request by the user equipment, is received by a specific interrogating call state control function entity. In the following, the specific interrogating call state control function entity transmits a location information request message (related to a service identity that is known to a home subscriber server) to a home subscriber server. Consequently, the home subscriber server transmits required capability information to the specific interrogating call state control function entity, wherein the required capability information corresponds to a capability that needs to be provided by a specific serving call state control function entity that is to be selected by the specific interrogating call state control function entity. In any subsequent location information answer message (that is related to the same service identity associated to the prior request of an IP multimedia subsystem communication service by a user equipment) from the home subscriber server to the specific or another interrogating call state control function entity, again a required capability information is transmitted, wherein the required capability information corresponds to a capability that needs to be provided by a specific serving call state control function entity that is to be selected by the specific or another interrogating call state control function entity.

Thus, according to the present invention, the interrogating call state control function entity can afterward select a specific serving call state control function entity, since the interrogating call state control function entity is supplied by the home subscriber server with the required capability information. This process is in particular also possible, if there has already been an incoming request of an IP (Internet Protocol) multimedia subsystem communication service regarding this particular service identity before, and a serving call state control function entity has already been involved in the processing of said prior request of an IP (Internet Protocol) multimedia subsystem communication service.

The object of the present invention is furthermore achieved by a program comprising a computer readable program code which, when executed on a computer or on a home subscriber server or on a network node of a communication network, especially providing the functionalities of a home subscriber server, or in part on a home subscriber server and in part on a network node of the communication network, causes the computer or the home subscriber server or the network node of the communication network to perform the steps of the inventive method.

The object of the present invention is furthermore achieved by a computer program product for an enhanced control function selection in a communication network and with respect to a user equipment requesting an IP (Internet Protocol) multimedia subsystem communication service from the communication network, the computer program product comprising a computer program stored on a storage medium, the computer program comprising program code which, when executed on a computer or on a home subscriber server or on a network node of a communication network, especially providing the functionalities of a home subscriber server, or in part on a home subscriber server and in part on a network node of the communication network, causes the computer or the home subscriber server or the network node of the communication network to perform the steps of the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a telecommunications network for an enhanced control function selection in the communication network according to an embodiment of the present invention, wherein the communication network realizes the inventive method.
**Figure 2** schematically illustrates a flow diagram according to an embodiment of the present invention and especially according to an embodiment of the inventive method.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

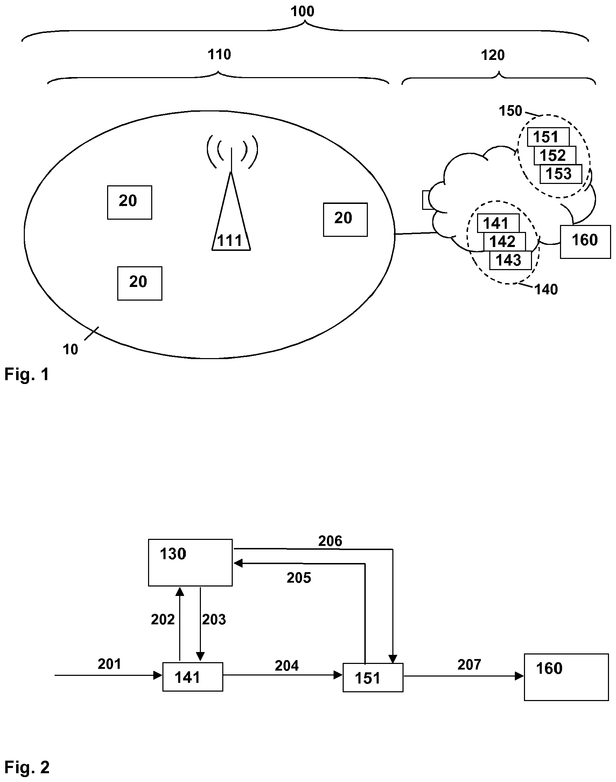

In Figure 1 a communication network 100 for an enhanced control function selection in the communication network 100 according to an embodiment of the present invention is schematically illustrated, wherein the communication network 100 comprises an access network 110 and a core network 120. The access network 110 comprises a serving cell 10 with at least one access node 111 and at least one user equipment 20 (but typically several user equipments 20). Furthermore, the communication network 100 comprises a plurality of serving call state control function entities 150 and a plurality of interrogating call state control function entities 140. Herein, the plurality of serving call state control function entities 150 comprises several serving call state control function entities 151, 152, 153, and the plurality of interrogating call state control function entities 140 comprises several interrogating call state control function entities 141, 142, 143. Additionally, the communication network comprises an application server entity 160.

In Figure 2 a flow diagram according to an embodiment of the present invention and especially according to an embodiment of the inventive method is schematically illustrated. The handling of an incoming request, regarding an IP multimedia subsystem communication service being related to a service identity (i.e., addressed to a service identity), from a user equipment 20 is illustrated. In a first step, an initiating message 201 (e.g., an initiating SIP message, such as an SIP invite message, SIP options message, SIP subscribe message etc.), which is related to the incoming request of the user equipment 20, is received by a specific interrogating call state control function entity 141. Such a corresponding initiating message 201 can be sent from different entities within the communication network, e.g. from an interconnection border control function or media gateway control function etc., to the specific interrogating call state control function entity 141 (only the terminating leg of the process is shown in Figure 2). Next, in a second step, a location information request message 202 is transmitted by the specific interrogating call state control function entity 141 to a home subscriber server 130 of the communication network 100. The home subscriber server 130 comprises information on the service identity (e.g., a specific range of numbers, wildcarded public service identity) related to the request of the user equipment 20. Next, a location information answer message 203 is transmitted by the home subscriber server 130 to the specific interrogating call state control function entity 141. This location information answer message 203 comprises a required capability information. This required capability information indicates the capability that needs to be provided by a specific serving call state control function entity 151 that is to be selected by the specific interrogating call state control function entity 141 in order to appropriately handle the incoming request from the user equipment 20, regarding an IP multimedia subsystem communication service being related to a service identity. Based on this capability information, the specific interrogating call state control function entity 141 selects an appropriate specific serving call state control function entity 151 for further handling the request from the user equipment 20. Next, an initiating message 204 (e.g., an invite message) is transmitted by the specific interrogating call state control function entity 141 to the selected serving call state control function entity 151. In the following, a server assignment request message 205 is sent and transmitted from the selected serving call state control function entity 151 to the home subscriber server 130. This server assignment request message 205 is followed by a server assignment answer message 206, which is transmitted from the home subscriber server 130 to the selected serving call state control function entity 151. This server assignment answer message 206 comprises the required service profile (e.g., initial filter criteria) (requested by the selected serving call state control function entity in the server assignment request message 205 before). After the required service profile is transmitted to the selected serving call state control function entity 151 and installed on it, the request of the user equipment can be further processed by the selected serving call state control function entity 151 and an initiating message 207 (e.g., an SIP invite message) is sent by the selected serving call state control function entity 151 to an application server entity 160.
When, later in time, the same (or another) user equipment 20 sends a new request concerning an IP multimedia subsystem communication service being related to a service identity (i.e. addressed to a service identity) to the communication network, and an initiating message 201 (e.g. and initiating SIP message, such as an SIP invite message, SIP options message, SIP subscribe message etc.), which is related to this new incoming request of the (or another) user equipment 20, is received by a specific interrogating call state control function entity 141 (or another interrogating call state control function entity 142, 143 out of the plurality of interrogating call state control function entities 140), the inventive method is carried out again. Even if this new request by the user equipment 20 now concerns the same service identity as another, prior request by the (or another) user equipment 20, the location information answer message 203, transmitted from the home subscriber server 130 to the specific interrogating call state control function entity 141 during the handling of this new request from the user equipment, again comprises a required capability information. This required capability information indicates the capability that needs to be provided by a serving call state control function entity 151, 152, 153 that is to be selected by the specific interrogating call state control function entity 141 (or the other interrogating call state control function entity 142, 143) in order to appropriately handle the incoming request from the user equipment 20, regarding an IP multimedia subsystem communication service being related to a service identity. This means that for this new request of the user equipment 20, regarding the same service identity as a prior request, not necessarily the same specific serving call state control function entity 151 that was selected for handling the prior request, is selected again, but the same or another (possible more appropriate, e.g., in terms of geographical distance, or less frequently used) serving call state control function entity 152 is selected by the specific interrogating call state control function entity 141 (or the other interrogating call state control function entity 142, 143).

## Claims

1. Method for an enhanced control function selection in a communication network (100) and with respect to a user equipment (20) requesting an IP (Internet Protocol) multimedia subsystem communication service from the communication network (100), wherein the communication network (100) comprises an access network (110) and a core network (120), the access network comprising at least one access node (111), wherein the communication network (100) comprises a home subscriber server (130), a plurality of interrogating call state control function entities (140) and a plurality of serving call state control function entities (150), wherein - with respect to the user equipment (20) requesting the IP multimedia subsystem communication service being related to a service identity that is known to the home subscriber server (130) - a specific interrogating call state control function entity (141) is used among the plurality of interrogating call state control function entities (140), and a specific serving call state control function entity (151) needs to be selected among the plurality of serving call state control function entities (150), wherein the method comprises the following steps:
-- in a first step, upon a request of an IP (Internet Protocol) multimedia subsystem communication service by the user equipment (20), an initiating message (201), related to the service identity, is received by the specific interrogating call state control function entity (141),
-- in a second step, subsequent to the first step, a location information request message (202) is transmitted, by the specific interrogating call state control function entity (141), to the home subscriber server (130),
-- in a third step, subsequent to the second step, a location information answer message (203) is transmitted, by the home subscriber server (130), to the specific interrogating call state control function entity (141),
wherein the location information answer message (203) comprises a required capability information, the required capability information corresponding to a capability that needs to be provided by the specific serving call state control function entity (151) that is to be selected, by the specific interrogating call state control function entity (141), among the plurality of serving call state control function entities (150),
wherein any subsequent location information answer message - in response to a subsequent location information request message - that is
-- received by the home subscriber server (130) and
-- transmitted either by the specific interrogating call state control function entity (141) or by another one of the plurality of interrogating call state control function entities (140) - as the requesting entity - and
-- related to the service identity related to the IP multimedia subsystem communication service requested by the user equipment (20),
likewise comprises a required capability information such that the requesting entity - the specific interrogating call state control function entity (141) or the other one of the plurality of interrogating call state control function entities (140) - selects the specific serving call state control function entity (151), that is thereby becoming the selected serving call state control function entity (151) corresponding to the subsequent location information request message.

2. Method according to claim 1, wherein in a fourth step, subsequent to the third step, the initiating message or a corresponding initiating message (204) is transmitted, by the specific interrogating call state control function entity (141), to the selected serving call state control function entity (151).

3. Method according to one of the preceding claims, wherein in a fifth step, subsequent to the fourth step, a server assignment request message (205) is transmitted from the selected serving call state control function entity (151) to the home subscriber server (130) in case that the selected serving call state control function entity (151) lacks a service profile that is required for providing the IP multimedia subsystem communication service requested by the user equipment (20), wherein in a sixth step, subsequent to the fifth step, a server assignment answer message (206) is transmitted from the home subscriber server (130) to the selected serving call state control function entity (151), the server assignment answer message (206) providing the required service profile.

4. Method according to one of the preceding claims, wherein, after the home subscriber server (130) having received the server assignment request message (205) from the selected serving call state control function entity (151) in the fifth step, it is avoided that - within the home subscriber server (130) - the selected serving call state control function entity (151) is assigned to or associated with the service identity and/or any assignment or association information assigned to or associated with the service identity does not specify the selected serving call state control function entity (151).

5. Method according to one of the preceding claims, wherein the service identity - being related to the IP multimedia subsystem communication service requested by the user equipment (20) - corresponds to a wildcarded public service identity.

6. Method according to one of the preceding claims, wherein the required capability information indicates, to the specific interrogating call state control function entity (141), a subset of the plurality of serving call state control function entities (150) to be potentially assigned to the handling of the IP multimedia subsystem communication service requested by the user equipment (20).

7. Communication network (100) for an enhanced control function selection with respect to a user equipment (20) requesting an IP (Internet Protocol) multimedia subsystem communication service from the communication network (100), wherein the communication network (100) comprises an access network (110) and a core network (120), the access network comprising at least one access node (111), wherein the communication network (100) comprises a home subscriber server (130), a plurality of interrogating call state control function entities (140) and a plurality of serving call state control function entities (150), wherein - with respect to the user equipment (20) requesting the IP multimedia subsystem communication service being related to a service identity that is known to the home subscriber server (130) - a specific interrogating call state control function entity (141) is used among the plurality of interrogating call state control function entities (140), and a specific serving call state control function entity (151) needs to be selected among the plurality of serving call state control function entities (150), wherein the communication network (100) is configured such that:
-- upon a request of an IP (Internet Protocol) multimedia subsystem communication service by the user equipment (20), an initiating message (201), related to the service identity, is received by the specific interrogating call state control function entity (141),
-- a location information request message (202) is transmitted, by the specific interrogating call state control function entity (141), to the home subscriber server (130),
-- a location information answer message (203) is transmitted, by the home subscriber server (130), to the specific interrogating call state control function entity (141),
wherein the location information answer message (203) comprises a required capability information, the required capability information corresponding to a capability that needs to be provided by the specific serving call state control function entity (151) that is to be selected, by the specific interrogating call state control function entity (141), among the plurality of serving call state control function entities (150),
wherein the communication network (100) is further configured such that any subsequent location information answer message - in response to a subsequent location information request message - that is
-- received by the home subscriber server (130) and
-- transmitted either by the specific interrogating call state control function entity (141) or by another one of the plurality of interrogating call state control function entities (140) - as the requesting entity - and
-- related to the service identity related to the IP multimedia subsystem communication service requested by the user equipment (20),
likewise comprises a required capability information such that the requesting entity - the specific interrogating call state control function entity (141) or the other one of the plurality of interrogating call state control function entities (140) - selects the specific serving call state control function entity (151), that is thereby becoming the selected serving call state control function entity (151) corresponding to the subsequent location information request message.

8. Home subscriber server (130) for an enhanced control function selection in a communication network (100) according to claim 7.

9. Program comprising a computer readable program code which, when executed on a computer or on a home subscriber server (130) or on a network node of a communication network (100), especially providing the functionalities of a home subscriber server (130), or in part on a home subscriber server (130) and in part on a network node of the communication network (100), causes the computer or the home subscriber server (130) or the network node of the communication network (100) to perform a method according to any one of claims 1 to 6.

10. Computer readable storage medium for an enhanced control function selection in a communication network (100) and with respect to a user equipment (20) requesting an IP (Internet Protocol) multimedia subsystem communication service from the communication network (100), the computer readable storage medium comprising program code which, when executed on a computer or on a home subscriber server (130) or on a network node of a communication network (100), especially providing the functionalities of a home subscriber server (130), or in part on a home subscriber server (130) and in part on a network node of the communication network (100), causes the computer or the home subscriber server (130) or the network node of the communication network (100) to perform a method according to any one of claims 1 to 6.

## Patentansprüche

1. Verfahren für eine verbesserte Steuerfunktionsauswahl in einem Kommunikationsnetzwerk (100) und in Bezug auf eine Nutzerausrüstung (20), die einen Internetprotokoll(IP)-Multimediauntersystem-Kommunikationsdienst von dem Kommunikationsnetzwerk (100) anfordert, wobei das Kommunikationsnetzwerk (100) ein Zugangsnetzwerk (110) und ein Kernnetzwerk (120) umfasst, wobei das Zugangsnetzwerk mindestens einen Zugangsknoten (111) umfasst, wobei das Kommunikationsnetzwerk (100) einen Heimteilnehmerserver (130), mehrere abfragende Anrufzustand-Steuerfunktionseinheiten (140) und mehrere bedienende Anrufzustand-Steuerfunktionseinheiten (150) umfasst, wobei - in Bezug auf die Nutzerausrüstung (20), die den IP-Multimediauntersystem-Kommunikationsdienst anfordert, der sich auf eine Dienstidentität bezieht, die dem Heimteilnehmerserver (130) bekannt ist - eine spezifische abfragende Anrufzustand-Steuerfunktionseinheit (141) unter den mehreren abfragenden Anrufzustand-Steuerfunktionseinheiten (140) verwendet wird und eine spezifische bedienende Anrufzustand-Steuerfunktionseinheit (151) unter den mehreren bedienenden Anrufzustand-Steuerfunktionseinheiten (150) ausgewählt werden muss, wobei das Verfahren die folgenden Schritte umfasst:
- in einem ersten Schritt, bei einer Anforderung eines Internetprotokoll(IP)-Multimediauntersystem-Kommunikationsdienstes durch die Nutzerausrüstung (20), wird eine Initialisierungsnachricht (201), die sich auf die Dienstidentität bezieht, durch die spezifische abfragende Anrufzustand-Steuerfunktionseinheit (141) empfangen,
- in einem zweiten Schritt, nachfolgend auf den ersten Schritt, wird eine Standortinformationen-Anforderungsnachricht (202) durch die spezifische abfragende Anrufzustand-Steuerfunktionseinheit (141) an den Heimteilnehmerserver (130) übertragen,
- in einem dritten Schritt, nachfolgend auf den zweiten Schritt, wird eine Standortinformationen-Antwortnachricht (203) durch den Heimteilnehmerserver (130) an die spezifische abfragende Anrufzustand-Steuerfunktionseinheit (141) übertragen,
wobei die Standortinformationen-Antwortnachricht (203) eine Information über eine erforderliche Fähigkeit umfasst, wobei die Information über eine erforderliche Fähigkeit einer Fähigkeit entspricht, die durch die spezifische bedienende Anrufzustand-Steuerfunktionseinheit (151) bereitgestellt werden muss, das heißt durch die spezifische abfragende Anrufzustand-Steuerfunktionseinheit (141) unter den mehreren bedienenden Anrufzustand-Steuerfunktionseinheiten (150) auszuwählen ist,
wobei jegliche nachfolgende Standortinformationen-Antwortnachricht - als Reaktion auf eine nachfolgende Standortinformationen-Anforderungsnachricht - die
- durch den Heimteilnehmerserver (130) empfangen wird und
- entweder durch die spezifische abfragende Anrufzustand-Steuerfunktionseinheit (141) oder durch eine andere der mehreren abfragenden Anrufzustand-Steuerfunktionseinheiten (140) - als anfordernde Einheit - übertragen wird und
- sich auf die Dienstidentität bezieht, die sich auf den IP-Multimediauntersystem-Kommunikationsdienst bezieht, der durch die Nutzerausrüstung (20) angefordert wird,
gleichermaßen eine Information über eine erforderliche Fähigkeit umfasst, so dass die anfordernde Einheit - die spezifische abfragende Anrufzustand-Steuerfunktionseinheit (141) oder die andere der mehreren abfragenden Anrufzustand-Steuerfunktionseinheiten (140) - die spezifische bedienende Anrufzustand-Steuerfunktionseinheit (151) auswählt, die dadurch die ausgewählte bedienende Anrufzustand-Steuerfunktionseinheit (151) entsprechend der nachfolgenden Standortinformationen-Anforderungsnachricht wird.

2. Verfahren nach Anspruch 1, wobei in einem vierten Schritt, nachfolgend auf den dritten Schritt, die Initialisierungsnachricht oder eine entsprechende Initialisierungsnachricht (204) durch die spezifische abfragende Anrufzustand-Steuerfunktionseinheit (141) an die ausgewählte bedienende Anrufzustand-Steuerfunktionseinheit (151) übertragen wird.

3. Verfahren nach einem der vorhergehenden Ansprüche, wobei in einem fünften Schritt, nachfolgend auf den vierten Schritt, eine Serverzuweisung-Anforderungsnachricht (205) von der ausgewählten bedienenden Anrufzustand-Steuerfunktionseinheit (151) an den Heimteilnehmerserver (130) in einem Fall übertragen wird, in dem der ausgewählten bedienenden Anrufzustand-Steuerfunktionseinheit (151) ein Dienstprofil fehlt, das zum Bereitstellen des IP-Multimediauntersystem-Kommunikationsdienstes erforderlich ist, der durch die Nutzerausrüstung (20) angefordert wird, wobei in einem sechsten Schritt, nachfolgend auf den fünften Schritt, eine Serverzuweisung-Anforderungsnachricht (206) von dem Heimteilnehmerserver (130) an die ausgewählte bedienende Anrufzustand-Steuerfunktionseinheit (151) übertragen wird, wobei die Serverzuweisung-Anforderungsnachricht (206) das erforderliche Dienstprofil bereitstellt.

4. Verfahren nach einem der vorhergehenden Ansprüche, wobei, nachdem der Heimteilnehmerserver (130) die Serverzuweisung-Anforderungsnachricht (205) von der ausgewählten bedienenden Anrufzustand-Steuerfunktionseinheit (151) in dem fünften Schritt empfangen hat, vermieden wird, dass - innerhalb des Heimteilnehmerservers (130) - die ausgewählte bedienende Anrufzustand-Steuerfunktionseinheit (151) der Dienstidentität zugewiesen oder zugeordnet wird, und/oder jegliche Zuweisungs- oder Zuordnungsinformationen, die der Dienstidentität zugewiesen oder zugeordnet sind, die ausgewählte bedienende Anrufzustand-Steuerfunktionseinheit (151) nicht spezifizieren.

5. Verfahren nach einem der vorhergehenden Ansprüche, wobei die Dienstidentität - die sich auf den IP-Multimediauntersystem-Kommunikationsdienst bezieht, der durch die Nutzerausrüstung (20) angefordert wird - einer mit Platzhalter versehenen öffentlichen Dienstidentität entspricht.

6. Verfahren nach einem der vorhergehenden Ansprüche, wobei die Information über eine erforderliche Fähigkeit der spezifischen abfragenden Anrufzustand-Steuerfunktionseinheit (141) einen Untersatz der mehreren bedienenden Anrufzustand-Steuerfunktionseinheiten (150) angibt, der potentiell dem Handhaben des IP-Multimediauntersystem-Kommunikationsdienstes, der durch die Nutzerausrüstung (20) angefordert wird, zuzuweisen ist.

7. Kommunikationsnetzwerk (100) für eine verbesserte Steuerfunktionsauswahl in Bezug auf eine Nutzerausrüstung (20), die einen Internetprotokoll(IP)-Multimediauntersystem-Kommunikationsdienst von dem Kommunikationsnetzwerk (100) anfordert, wobei das Kommunikationsnetzwerk (100) ein Zugangsnetzwerk (110) und ein Kernnetzwerk (120) umfasst, wobei das Zugangsnetzwerk mindestens einen Zugangsknoten (111) umfasst, wobei das Kommunikationsnetzwerk (100) einen Heimteilnehmerserver (130), mehrere abfragende Anrufzustand-Steuerfunktionseinheiten (140) und mehrere bedienende Anrufzustand-Steuerfunktionseinheiten (150) umfasst, wobei - in Bezug auf die Nutzerausrüstung (20), die den IP-Multimediauntersystem-Kommunikationsdienst anfordert, der sich auf eine Dienstidentität bezieht, die dem Heimteilnehmerserver (130) bekannt ist - eine spezifische abfragende Anrufzustand-Steuerfunktionseinheit (141) unter den mehreren abfragenden Anrufzustand-Steuerfunktionseinheiten (140) verwendet wird und eine spezifische bedienende Anrufzustand-Steuerfunktionseinheit (151) unter den mehreren bedienenden Anrufzustand-Steuerfunktionseinheiten (150) ausgewählt werden muss, wobei das Kommunikationsnetzwerk (100) derart eingerichtet ist, dass:
- bei einer Anforderung eines Internetprotokoll(IP)-Multimediauntersystem-Kommunikationsdienstes durch die Nutzerausrüstung (20), eine Initialisierungsnachricht (201), die sich auf die Dienstidentität bezieht, durch die spezifische abfragende Anrufzustand-Steuerfunktionseinheit (141) empfangen wird,
- eine Standortinformationen-Anforderungsnachricht (202) durch die spezifische abfragende Anrufzustand-Steuerfunktionseinheit (141) an den Heimteilnehmerserver (130) übertragen wird,
- eine Standortinformationen-Antwortnachricht (203) durch den Heimteilnehmerserver (130) an die spezifische abfragende Anrufzustand-Steuerfunktionseinheit (141) übertragen wird,
wobei die Standortinformationen-Antwortnachricht (203) eine Information über eine erforderliche Fähigkeit umfasst, wobei die Information über eine erforderliche Fähigkeit einer Fähigkeit entspricht, die durch die spezifische bedienende Anrufzustand-Steuerfunktionseinheit (151) bereitgestellt werden muss, das heißt durch die spezifische abfragende Anrufzustand-Steuerfunktionseinheit (141) unter den mehreren bedienenden Anrufzustand-Steuerfunktionseinheiten (150) auszuwählen ist,
wobei das Kommunikationsnetzwerk (100) ferner derart eingerichtet ist, dass jegliche nachfolgende Standortinformationen-Antwortnachricht - als Reaktion auf eine nachfolgende Standortinformationen-Anforderungsnachricht - die
- durch den Heimteilnehmerserver (130) empfangen wird und
- entweder durch die spezifische abfragende Anrufzustand-Steuerfunktionseinheit (141) oder durch eine andere der mehreren abfragenden Anrufzustand-Steuerfunktionseinheiten (140) - als anfordernde Einheit - übertragen wird und
- sich auf die Dienstidentität bezieht, die sich auf den IP-Multimediauntersystem-Kommunikationsdienst bezieht, der durch die Nutzerausrüstung (20) angefordert wird, gleichermaßen eine Information über eine erforderliche Fähigkeit umfasst, so dass die anfordernde Einheit - die spezifische abfragende Anrufzustand-Steuerfunktionseinheit (141) oder die andere der mehreren abfragenden Anrufzustand-Steuerfunktionseinheiten (140) - die spezifische bedienende Anrufzustand-Steuerfunktionseinheit (151) auswählt, die dadurch die ausgewählte bedienende Anrufzustand-Steuerfunktionseinheit (151) entsprechend der nachfolgenden Standortinformationen-Anforderungsnachricht wird.

8. Heimteilnehmerserver (130) für eine verbesserte Steuerfunktionsauswahl in einem Kommunikationsnetzwerk (100) nach Anspruch 7.

9. Programm, umfassend einen computerlesbaren Programmcode, der, wenn er auf einem Computer oder auf einem Heimteilnehmerserver (130) oder auf einem Netzwerkknoten eines Kommunikationsnetzwerks (100), der insbesondere die Funktionalitäten eines Heimteilnehmerservers (130) bereitstellt, oder teilweise auf einem Heimteilnehmerserver (130) und teilweise auf einem Netzwerkknoten des Kommunikationsnetzwerks (100) ausgeführt wird, den Computer oder den Heimteilnehmerserver (130) oder den Netzwerkknoten des Kommunikationsnetzwerks (100) dazu veranlasst, ein Verfahren nach einem der Ansprüche 1 bis 6 durchzuführen.

10. Computerlesbares Speichermedium für eine verbesserte Steuerfunktionsauswahl in einem Kommunikationsnetzwerk (100) und in Bezug auf eine Nutzerausrüstung (20), die einen Internetprotokoll(IP)-Multimediauntersystem-Kommunikationsdienst von dem Kommunikationsnetzwerk (100) anfordert, wobei das computerlesbare Speichermedium einen Programmcode umfasst, der, wenn er auf einem Computer oder auf einem Heimteilnehmerserver (130) oder auf einem Netzwerkknoten eines Kommunikationsnetzwerks (100), der insbesondere die Funktionalitäten eines Heimteilnehmerservers (130) bereitstellt, oder teilweise auf einem Heimteilnehmerserver (130) und teilweise auf einem Netzwerkknoten des Kommunikationsnetzwerks (100) ausgeführt wird, den Computer oder den Heimteilnehmerserver (130) oder den Netzwerkknoten des Kommunikationsnetzwerks (100) dazu veranlasst, ein Verfahren nach einem der Ansprüche 1 bis 6 durchzuführen.

## Revendications

1. Procédé pour une sélection de fonction de commande améliorée dans un réseau de communication (100) et par rapport à un équipement utilisateur (20) demandant un service de communication de sous-système multimédia IP (Protocole Internet) au réseau de communication (100), dans lequel le réseau de communication (100) comprend un réseau d'accès (110) et un réseau d'infrastructure (120), le réseau d'accès comprenant au moins un nœud d'accès (111), dans lequel le réseau de communication (100) comprend un serveur d'abonné local (130), une pluralité d'entités de fonction de commande d'état d'appel d'interrogation (140) et une pluralité d'entités de fonction de commande d'état d'appel de desserte (150), dans lequel - par rapport à l'équipement utilisateur (20) demandant le service de communication de sous-système multimédia IP lié à une identité de service qui est connue du serveur d'abonné local (130) - une entité de fonction de commande d'état d'appel d'interrogation (141) spécifique est utilisée parmi la pluralité d'entités de fonction de commande d'état d'appel d'interrogation (140), et une entité de fonction de commande d'état d'appel de desserte (151) spécifique doit être sélectionnée parmi la pluralité d'entités de fonction de commande d'état d'appel de desserte (150), dans lequel le procédé comprend les étapes suivantes :
- dans une première étape, lors d'une demande d'un service de communication de sous-système multimédia IP (protocole Internet) par l'équipement utilisateur (20), un message de lancement (201), lié à l'identité de service, est reçu par l'entité de fonction de commande d'état d'appel d'interrogation (141) spécifique,
- dans une deuxième étape, ultérieure à la première étape, un message de demande d'informations d'emplacement (202) est transmis, par l'entité de fonction de commande d'état d'appel d'interrogation (141) spécifique, au serveur d'abonné local (130),
- dans une troisième étape, ultérieure à la deuxième étape, un message de réponse d'informations d'emplacement (203) est transmis, par le serveur d'abonné local (130), à l'entité de fonction de commande d'état d'appel d'interrogation (141) spécifique,
dans lequel le message de réponse d'informations d'emplacement (203) comprend une information de capacité requise, l'information de capacité requise correspondant à une capacité qui doit être fournie par l'entité de fonction de commande d'état d'appel de desserte (151) spécifique qui doit être sélectionnée, par l'entité de fonction de commande d'état d'appel d'interrogation (141) spécifique, parmi la pluralité d'entités de fonction de commande d'état d'appel de desserte (150),
dans lequel tout message de réponse d'informations d'emplacement ultérieur - en réponse à un message de demande d'informations d'emplacement ultérieur - qui est
- reçu par le serveur d'abonné local (130) et
- transmis soit par l'entité de fonction de commande d'état d'appel d'interrogation (141) spécifique soit par une autre de la pluralité d'entités de fonction de commande d'état d'appel d'interrogation (140) - en tant qu'entité de demande - et
- lié à l'identité de service liée au service de communication de sous-système multimédia IP demandé par l'équipement utilisateur (20),
comprend de même une information de capacité requise de sorte que l'entité de demande - l'entité de fonction de commande d'état d'appel d'interrogation (141) spécifique ou l'autre de la pluralité d'entités de fonction de commande d'état d'appel d'interrogation (140) - sélectionne l'entité de fonction de commande d'état d'appel de desserte (151) spécifique, qui devient ainsi l'entité de fonction de commande d'état d'appel de desserte (151) sélectionnée correspondant au message de demande d'informations d'emplacement ultérieur.

2. Procédé selon la revendication 1, dans lequel dans une quatrième étape, ultérieure à la troisième étape, le message de lancement ou un message de lancement correspondant (204) est transmis, par l'entité de fonction de commande d'état d'appel d'interrogation (141) spécifique, à l'entité de fonction de commande d'état d'appel de desserte (151) sélectionnée.

3. Procédé selon l'une des revendications précédentes, dans lequel dans une cinquième étape, ultérieure à la quatrième étape, un message de demande d'attribution de serveur (205) est transmis de l'entité de fonction de commande d'état d'appel de desserte (151) sélectionnée au serveur d'abonné local (130) au cas où l'entité de fonction de commande d'état d'appel de desserte (151) sélectionnée est dépourvue d'un profil de service qui est requis pour fournir le service de communication de sous-système multimédia IP demandé par l'équipement utilisateur (20), dans lequel dans une sixième étape, ultérieure à la cinquième étape, un message de réponse d'attribution de serveur (206) est transmis du serveur d'abonné local (130) à l'entité de fonction de commande d'état d'appel de desserte (151) sélectionnée, le message de réponse d'attribution de serveur (206) fournissant le profil de service requis.

4. Procédé selon l'une des revendications précédentes, dans lequel, après réception par le serveur d'abonné local (130) du message de demande d'attribution de serveur (205) en provenance de l'entité de fonction de commande d'état d'appel de desserte (151) sélectionnée à la cinquième étape, on évite que - au sein du serveur d'abonné local (130) - l'entité de fonction de commande d'état d'appel de desserte (151) sélectionnée soit attribuée ou associée à l'identité de service et/ou toute information d'attribution d'association attribuée ou associée à l'identité de service ne spécifie pas l'entité de fonction de commande d'état d'appel de desserte (151) sélectionnée.

5. Procédé selon l'une des revendications précédentes, dans lequel l'identité de service - liée au service de communication de sous-système multimédia IP demandé par l'équipement utilisateur (20) - correspond à une identité de service public à caractère de remplacement.

6. Procédé selon l'une des revendications précédentes, dans lequel l'information de capacité requise indique, à l'entité de fonction de commande d'état d'appel d'interrogation (141) spécifique, un sous-ensemble de la pluralité d'entités de fonction de commande d'état d'appel de desserte (150) à attribuer potentiellement pour la gestion du service de communication de sous-système multimédia IP demandé par l'équipement utilisateur (20).

7. Réseau de communication (100) pour une sélection de fonction de commande améliorée par rapport à un équipement utilisateur (20) demandant un service de communication de sous-système multimédia IP (Protocole Internet) au réseau de communication (100), dans lequel le réseau de communication (100) comprend un réseau d'accès (110) et un réseau d'infrastructure (120), le réseau d'accès comprenant au moins un nœud d'accès (111), dans lequel le réseau de communication (100) comprend un serveur d'abonné local (130), une pluralité d'entités de fonction de commande d'état d'appel d'interrogation (140) et une pluralité d'entités de fonction de commande d'état d'appel de desserte (150), dans lequel - par rapport à l'équipement utilisateur (20) demandant le service de communication de sous-système multimédia IP lié à une identité de service qui est connue du serveur d'abonné local (130) - d'une entité de fonction de commande d'état d'appel d'interrogation (141) spécifique est utilisée parmi la pluralité d'entités de fonction de commande d'état d'appel d'interrogation (140), et une entité de fonction de commande d'état d'appel de desserte (151) spécifique doit être sélectionnée parmi la pluralité d'entités de fonction de commande d'état d'appel de desserte (150), dans lequel le réseau de communication (100) est configuré de sorte que :
- lors d'une demande d'un service de communication de sous-système multimédia IP (protocole Internet) par l'équipement utilisateur (20), un message de lancement (201), lié à l'identité de service, est reçu par l'entité de fonction de commande d'état d'appel d'interrogation (141) spécifique,
- un message de demande d'informations d'emplacement (202) est transmis, par l'entité de fonction de commande d'état d'appel d'interrogation (141) spécifique, au serveur d'abonné local (130),
- un message de réponse d'informations d'emplacement (203) est transmis, par le serveur d'abonné local (130), à l'entité de fonction de commande d'état d'appel d'interrogation (141) spécifique,
dans lequel le message de réponse d'informations d'emplacement (203) comprend une information de capacité requise, l'information de capacité requise correspondant à une capacité qui doit être fournie par l'entité de fonction de commande d'état d'appel de desserte (151) spécifique qui doit être sélectionnée, par l'entité de fonction de commande d'état d'appel d'interrogation (141) spécifique, parmi la pluralité d'entités de fonction de commande d'état d'appel de desserte (150),
dans lequel le réseau de communication (100) est en outre configuré de sorte que tout message de réponse d'informations d'emplacement ultérieur - en réponse à un message de demande d'informations d'emplacement ultérieur - qui est
- reçu par le serveur d'abonné local (130) et
- transmis soit par l'entité de fonction de commande d'état d'appel d'interrogation (141) spécifique soit par une autre de la pluralité d'entités de fonction de commande d'état d'appel d'interrogation (140) - en tant qu'entité de demande - et
- lié à l'identité de service liée au service de communication de sous-système multimédia IP demandé par l'équipement utilisateur (20),
comprend de même une information de capacité requise de sorte que l'entité de demande - l'entité de fonction de commande d'état d'appel d'interrogation (141) spécifique ou l'autre de la pluralité d'entités de fonction de commande d'état d'appel d'interrogation (140) - sélectionne l'entité de fonction de commande d'état d'appel de desserte (151) spécifique, qui devient ainsi l'entité de fonction de commande d'état d'appel de desserte (151) sélectionnée correspondant au message de demande d'informations d'emplacement ultérieur.

8. Serveur d'abonné local (130) pour une sélection de fonction de commande améliorée dans un réseau de communication (100) selon la revendication 7.

9. Programme comprenant un code de programme lisible par ordinateur qui, lorsqu'il est exécuté sur un ordinateur ou sur un serveur d'abonné local (130) ou sur un nœud de réseau d'un réseau de communication (100), assurant notamment les fonctionnalités d'un serveur d'abonné local (130), ou en partie sur un serveur d'abonné local (130) et en partie sur un nœud de réseau du réseau de communication (100), amène l'ordinateur ou le serveur d'abonné local (130) ou le nœud de réseau du réseau de communication (100) à réaliser un procédé selon l'une quelconque des revendications 1 à 6.

10. Support de stockage lisible par ordinateur pour une sélection de fonction de commande améliorée dans un réseau de communication (100) et par rapport à un équipement utilisateur (20) demandant un service de communication de sous-système multimédia IP (protocole Internet) au réseau de communication (100), le support de stockage lisible par ordinateur comprenant un code de programme qui, lorsqu'il est exécuté sur un ordinateur ou sur un serveur d'abonné local (130) ou sur un nœud de réseau d'un réseau de communication (100), assurant notamment les fonctionnalités d'un serveur d'abonné local (130), ou en partie sur un serveur d'abonné local (130) et en partie sur un nœud de réseau du réseau de communication (100), amène l'ordinateur ou le serveur d'abonné local (130) ou le nœud de réseau du réseau de communication (100) à réaliser un procédé selon l'une quelconque des revendications 1 à 6.
